# EUROPÄISCHE PATENTSCHRIFT

(11) **EP 0 657 720 B1**
(45) Veröffentlichungstag und Bekanntmachung des Hinweises auf die Patenterteilung: **13.06.2001**
(21) Anmeldenummer: 94116595.3
(22) Anmeldetag: 21.10.1994
(51) Int. Cl.: G01D 5/34, G01D 5/347, G01D 5/245

(54) **Positionsmesseinrichtung**
Position measuring device
Dispositif de mesure de positions

(30) Priorität: 03.12.1993 DE 4341190
(43) Veröffentlichungstag der Anmeldung: 14.06.1995
(73) Patentinhaber: Dr. Johannes Heidenhain GmbH, 83292 Traunreut (DE)
(72) Erfinder: Ernst, Alfons, D-83301 Traunreut (DE)

(56) Entgegenhaltungen:
- EP-A- 0 321 439
- EP-A- 0 503 716
- EP-A- 0 541 826
- DE-A- 2 220 934

## Beschreibung

Die Erfindung bezieht sich auf eine Positionsmeßeinrichtung gemäß dem Oberbegriff des Anspruches 1.

Derartige Positionsmeßeinrichtungen können als Längen- oder Winkelmeßeinrichtungen ausgeführt sein, die nach den verschiedenen physikalischen Prinzipien arbeiten.

Die Positionsmeßeinrichtungen werden an Maschinen eingesetzt, um die Relativlage zweier oder mehrerer Maschinen-Bauteile zu bestimmen.

Positionsmeßeinrichtungen mit den Merkmalen des Oberbegriffs des Anspruches 1 sind in der EP 0 321 439 A2 und der DE 35 26 735 A1 bekannt. Teilungsspuren sind ausschließlich im freien, nicht aufliegenden Bereich der Maßverkörperung angeordnet.

Bei der Positionsmeßeinrichtung gemäß der EP 0 503 716 B1 ist eine Maßverkörperung mit einer inkrementalen und einer codierten Teilungsspur ausgebildet und gemäß der EP 0 541 826 A1 sind unterschiedlich ausgebildete Teilungsspuren auf gegenüberliegenden Seiten einer Maßverkörperung angeordnet.

Wenn die Positionsmeßeinrichtungen beispielsweise in sogenannten Bearbeitungszentren eingesetzt werden, ist bei Positionsmeßeinrichtungen die Gefahr groß, daß mechanische Schwingungen ins Innere der Positionsmeßeinrichtungen übertragen werden. Daher ist neben anderen Spezifikationen auch eine hohe Schwingungsfestigkeit bei den Bauteilen von Positionsmeßeinrichtungen gefordert.

Der Erfindung liegt die Aufgabe zugrunde eine Positionsmeßeinrichtung mit hoher mechanischer Schwingungsfestigkeit zu schaffen, die eine möglichst hohe Meßgenauigkeit gewährleistet und dabei eine möglichst geringe Baugröße aufweist.

Diese Aufgabe wird von einer Positionsmeßeinrichtung mit den Merkmalen des Anspruches 1 gelöst.

Vorteilhafte Ausgestaltungsmöglichkeiten sind in den abhängigen Ansprüchen angegeben.

Die Vorteile der erfindungsgemäßen Positionsmeßeinrichtungen liegen vor allem darin, daß durch eine große Auflagefläche der Maßverkörperung auf deren Trägerkörper die Schwingungsfestigkeit hoch ist und durch die nahezu vollständige Nutzung der Oberfläche der Maßverkörperung als Träger mehrerer Teilungsspuren die Baugröße gering gehalten werden kann, obwohl die Meßgenauigkeit und die Einsatzvielfalt der Positionsmeßeinrichtung gesteigert werden können.

Das physikalische Abtastprinzip ist dabei von untergeordneter Bedeutung, wobei die Erfindung nachstehend mit Hilfe der Zeichnungen anhand einer lichtelektrisch arbeitenden Ausführungsform noch näher erläutert wird.

Es zeigt
- Figur 1: eine Längenmeßeinrichtung in perspektivischer Darstellung;
- Figur 2: einen Querschnitt der Positionsmeßeinrichtung gemäß Figur 1 in schematischer Darstellung und
- Figur 3: eine Variante im Querschnitt.

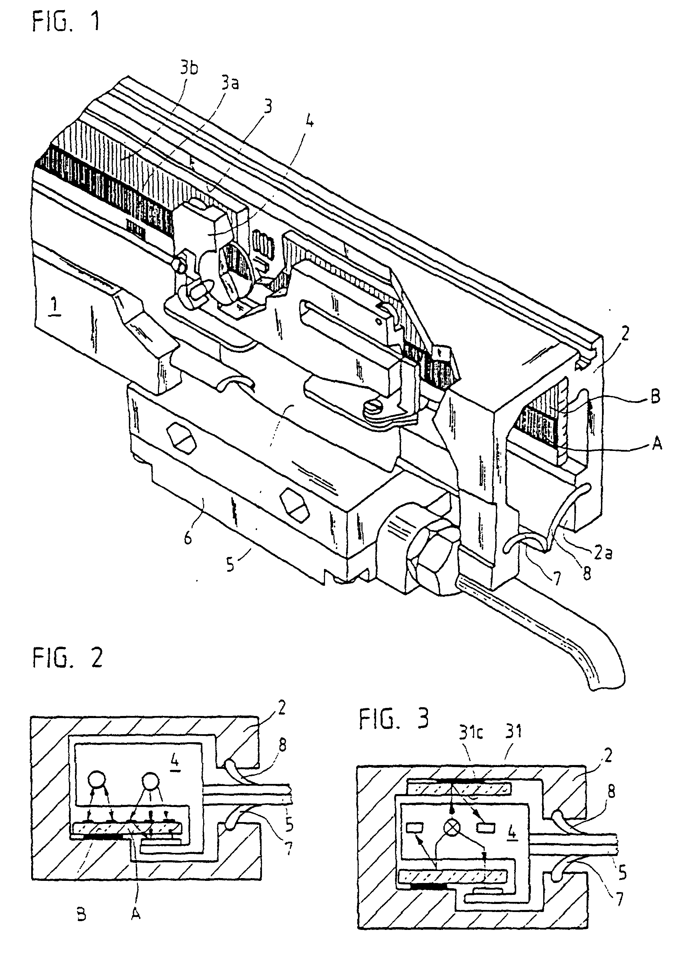

Eine in Figur 1 dargestellte Längenmeßeinrichtung 1 besteht im wesentlichen aus einem Leichtmetall-Gehäuse 2 als Trägerkörper für eine Maßverkörperung 3 die dort in bekannter Weise befestigt ist. Das Gehäuse 2 ist teilweise geschnitten dargestellt, so daß eine Abtasteinrichtung 4 sichtbar wird. Die Abtasteinrichtung 4 tastet in ebenfalls bekannter Weise photoelektrisch Meßteilungen 3a, 3b ab, die auf der Maßverkörperung 3 aufgebracht sind. Ein Mitnehmer 5, der den Querschnitt eines zweiseitigen Schwertes hat, verbindet die Abtasteinrichtung 4 mit einem Montagefuß 6. Der Mitnehmer 5 durchragt einen Längsschlitz 2a im Gehäuse 2, der durch dachförmig angeordnete Dichtlippen 7 und 8 abgedichtet ist.

Eine nicht dargestellte Maschine, bei der die Verschiebungen zwischen Maschinenbett und Schlitten gemessen werden sollen, trägt am Maschinenbett über Montagefuß 6 und Mitnehmer 5 die Abtasteinrichtung 4 und am Schlitten das Gehäuse 2 mit der Maßverkörperung 3.

In Figur 2 ist schematisch ein Querschnitt der Positionsmeßeinrichtung 1 dargestellt, um das Prinzip einfacher zu erläutern.

Bei diesem und dem folgenden Ausführungsbeispiel gemäß Figur 3 sind gleiche Bauteile oder Bauteile mit gleicher Funktion mit jeweils denselben Bezugszeichen versehen, um die Anzahl der Bezugszeichen gering zu halten und die Gegenüberstellung zu erleichtern.

Wie aus Figur 2 ersichtlich ist, weist die Maßverkörperung 3 zwei Bereiche A und B auf, von denen der eine auf dem das Gehäuse 2 bildenden Trägerkörper gekittet aufliegt und einen freien Teil. Der aufliegende Bereich B ist nur von einer Seite zugänglich, und zwar gegenüber dem aufliegenden Bereich. Der freie Bereich A ist beidseitig, nämlich von oben und unten zugänglich.

Beide Bereiche A und B weisen Teilungsspuren 3a und 3b auf, die im Regelfall eine unterschiedliche Auflösung ihrer Meßteilung aufweisen. Diese Spuren können Inkrementalspuren für die unterschiedlichsten physikalischen Abtastprinzipien sein, aber auch einzeln oder miteinander codierte Meßteilungen bilden. Ebenso sind Referenzmarken oder andere Informationsspuren möglich.

Die Teilungsspuren 3b im Bereich B werden nach dem sogenannten Auflicht- oder Reflexionsverfahren abgetastet. Um dieses durchzuführen, sind alle zur Abtastung erforderlichen Elemente wie Beleuchtung und Detektoren auf der einen, zugänglichen Seite der Maßverkörperung 3 angeordnet. Dies gilt analog sowohl für die optische, magnetische, kapazitive oder induktive Abtastung, die generell auch untereinander kombinierbar sind.

Für die Abtastung des freien Bereiches A mit den Teilungsspuren 3a sind auf einer Seite der Maßverkörperung 3 die Sendeelemente (Beleuchtung etc.) und auf der gegenüberliegenden Seite die Empfangselemente (optische Detektoren etc.) angeordnet. Dieses Abtastprinzip wird mit Durchlicht- oder Transmissionsverfahren bezeichnet und ist nach dem derzeitigen Kenntnisstand am besten mit optischen Mitteln zu realisieren. Aber auch hier sollen die vorgenannten Verfahren und ihre Kombinationen untereinander nicht ausgeschlossen werden.

Aus optischen Gründen ist es vorteilhaft, wegen der Beugungseffekte im Auflichtverfahren die gröberen, und im Durchlichtverfahren die feineren Teilungsperioden abzutasten.

Eine nach den vorstehenden Merkmalen konzipierte Positionsmeßeinrichtung 1 vereinigt die Vorteile einer guten Ausnutzung möglichst der gesamten Oberfläche der Maßverkörperung 3 durch möglichst viele Teilungsspuren 3a, 3b und damit u.a. eine Positionsinformation in codierter Form; einer großen Auflagefläche der Maßverkörperung 3 am Trägerkörper (Gehäuse 2) und damit eine hohe Schwingungsfestigkeit sowie einer hohen Auflösung als Voraussetzung für eine hohe Meßgenauigkeit.

Die Erfindung kann sowohl bei sogenannten offenen als auch gekapselten Positionsmeßeinrichtungen angewandt werden und auch die physikalischen Abtastprinzipien sind beliebig wähl- und kombinierbar.

## Patentansprüche

1. Positionsmeßeinrichtung (1) mit wenigstens einer Maßverkörperung (3), welche mit einem Teil ihres flächigen Oberflächenbereiches an einem Trägerkörper (2) aufliegend befestigt ist und auf ihrem flächigen Oberflächenbereich mehrere Teilungsspuren (3a, 3b) aufweist, denen Abtasteinrichtungen (4) zugeordnet sind, dadurch gekennzeichnet, daß zumindest die Teilungsspuren (3b), die auf der frei zugänglichen Seite der Maßverkörperung (3) gegenüber des am Trägerkörper (2) flächig aufliegenden Bereiches (B) angeordnet sind, von der zugeordneten Abtasteinrichtung (4) abgetastet werden, wobei alle zur Abtastung erforderlichen Elemente der Abtasteinrichtung (4) auf der einen frei zugänglichen Seite der Maßverkörperung (3) angeordnet sind und daß die Teilungsspuren (3a), die im freien, nicht aufliegenden Bereich (A) der Maßverkörperung (3) angeordnet sind, von der zugeordneten Abtasteinrichtung (4) abgetastet werden, wobei die zur Abtastung erforderlichen Elemente der Abtasteinrichtung (4) auf beiden Seiten der Maßverkörperung (3) angeordnet sind.

2. Positionsmeßeinrichtung nach Anspruch 1, dadurch gekennzeichnet, daß die Maßverkörperung (3) aus transparentem Material insbesondere Glas besteht.

3. Positionsmeßeinrichtung nach Anspruch 1, dadurch gekennzeichnet, daß die Teilungsspuren (3b) gegenüber des am Trägerkörper (2) aufliegenden Bereiches (B) optisch ablesbare Markierungen aufweisen, die im Auflichtverfahren abgetastet werden.

4. Positionsmeßeinrichtung nach Anspruch 1, dadurch gekennzeichnet, daß die Teilungsspuren (3a) im freien Bereich (A) der Maßverkörperung (3) optisch ablesbare Markierungen aufweisen, die im Durchlichtverfahren abgetastet werden.

5. Positionsmeßeinrichtung nach Anspruch 1, dadurch gekennzeichnet, daß der Trägerkörper (2) ein Hohlprofil ist, bei welchem durch Dichtelemente (7, 8) der Innenraum gegenüber Umgebungseinflüssen abgeschirmt ist.

6. Positionsmeßeinrichtung nach Anspruch 5, dadurch gekennzeichnet, daß im Hohlprofil (2) eine weitere Maßverkörperung (31) angeordnet ist, die wenigstens eine Teilungsspur (31c) aufweist, die von der Abtasteinrichtung (4) abgetastet wird, wobei alle zur Abtastung erforderlichen Elemente dieser Abtasteinrichtung (4) auf der die Teilungsspur (31c) tragenden Seite der weiteren Maßverkörperung (31) angeordnet sind.

7. Positionsmeßeinrichtung nach einem der vorhergehenden Ansprüche, dadurch gekennzeichnet, daß die Positionsmeßeinrichtung (1) eine inkrementale Meßeinrichtung ist, und eine der Teilungsspuren eine Referenzmarkenspur ist.

8. Positionsmeßeinrichtung nach einem der Ansprüche 1 bis 6, dadurch gekennzeichnet, daß die Positionsmeßeinrichtung (1) eine codierte Meßeinrichtung ist.

9. Positionsmeßeinrichtung nach einem der Ansprüche 1 bis 8, dadurch gekennzeichnet, daß zumindest eine Maßverkörperung (31) als Metallband ausgebildet ist.

## Claims

1. Position measuring device (1) having at least one material measure (3) which is secured with a portion of its flat surface area lying on a carrying body (2) and has on its flat surface area a plurality of division tracks (3a, 3b), with which scanning devices (4) are associated, **characterised in that** at least the division tracks (3b) which are disposed on the freely accessible side of the material measure (3), opposite the area (B) lying flat on the carrying body (2), are scanned by the associated scanning device (4), all the elements of the scanning device (4) which are necessary for scanning being disposed on the one freely accessible side of the material measure (3), and in that the division tracks (3a) which are disposed in the free area (A), not lying on the carrying body, of the material measure (3) are scanned by the associated scanning device (4), the elements of the scanning device (4) which are necessary for scanning being disposed on both sides of the material measure (3).

2. Position measuring device according to claim 1, **characterised in that** the material measure (3) consists of transparent material, especially glass.

3. Position measuring device according to claim 1, **characterised in that** the division tracks (3b) opposite the area (B) lying on the carrying body (2) have optically readable marks which are scanned by means of the reflected light method.

4. Position measuring device according to claim 1, **characterised in that** the division tracks (3a) in the free area (A) of the material measure (3) have optically readable marks which are scanned by means of the transmitted light method.

5. Position measuring device according to claim 1, **characterised in that** the carrying body (2) is a hollow profile in which the interior space is shielded from environmental influences by sealing elements (7, 8).

6. Position measuring device according to claim 5, **characterised in that** that there is disposed in the hollow profile (2) an additional material measure (31) which has at least one division track (31c) which is scanned by the scanning device (4), all the elements of this scanning device (4) which are necessary for scanning being disposed on the side of the additional material measure (31) which bears the division track (31c).

7. Position measuring device according to one of the preceding claims, **characterised in that** the position measuring device (1) is an incremental measuring device, and one of the division tracks is a reference mark track.

8. Position measuring device according to one of claims 1 to 6, **characterised in that** the position measuring device (1) is a coded measuring device.

9. Position measuring device according to one of claims 1 to 8, **characterised in that** at least one material measure is configured as a metal strip.

## Revendications

1. Dispositif de mesure de position (1) comprenant au moins une mesure matérialisée (3) qui est fixée à plat, par une partie de sa surface plane, sur un corps support (2) et porte sur sa partie de surface plane plusieurs graduations (3a, 3b) auxquelles sont associés des dispositifs de palpage (4), caractérisé en ce qu'au moins les graduations (3b) qui sont disposées sur la face librement accessible de la mesure matérialisée, en vis-à-vis de la partie (B) reposant à plat sur le corps support (2), sont lues par le dispositif de palpage (4) associé, tous les éléments du dispositif de palpage (4) nécessaires pour le palpage étant disposés du côté librement accessible de la mesure matérialisée et en ce que les graduations (3a) qui sont disposées dans la partie libre (A), sans appui, de la mesure matérialisée (3) sont palpées par le dispositif de palpage (4) associé, les éléments du dispositif de palpage (4) nécessaires pour le palpage étant disposés des deux côtés de la mesure matérialisée (3).

2. Dispositif de mesure de position selon la revendication 1, caractérisé en ce que la mesure matérialisée (3) est en un matériau transparent, en particulier en verre.

3. Dispositif de mesure de position selon la revendication 1, caractérisé en ce que la graduation (3b) en vis-à-vis de la partie (B) en appui sur le corps-support (2) comprend des repères lisibles par voie optique, qui sont palpés selon un procédé à lumière réfléchie.

4. Dispositif de mesure de position selon la revendication 1, caractérisé en ce que la graduation (3a) dans la partie (A) libre de la mesure matérialisée (3) en appui sur le corps-support (2) comprennd des repères lisibles par voie optique, qui sont palpés selon un procédé à lumière transmise.

5. Dispositif de mesure de position selon la revendication 1, caractérisé en ce que le corps-support (2) est un profilé creux dont la chambre intérieure est protégée des influences ambiantes par des éléments d'étanchéité (7, 8).

6. Dispositif de mesure de position selon la revendication 5, caractérisé en ce qu'une mesure matérialisée (31) supplémentaire est disposée dans le profilé creux (2), laquelle mesure matérialisée comporte au moins une graduation (31c) qui est palpée par le dispositif de palpage (4), tous les éléments du dispositif de palpage (4) nécessaires pour le palpage étant disposés sur le côté de la mesure matérialisée (31) supplémentaire portant la graduation (31c).

7. Dispositif de mesure de position selon une des revendications précédentes, caractérisé en ce que le dispositif de mesure de position (1) est un dispositif de mesure incrémental et que l'une des graduations est une rangée de repères de référence.

8. Dispositif de mesure de position selon une des revendications 1 à 6, caractérisé en ce que le dispositif de mesure de position (1) est un dispositif de mesure codé.

9. Dispositif de mesure de position selon une des revendications 1 à 8, caractérisé en ce qu'au moins une mesure matérialisée (31) est conformée en bande de métal.
